Europäisches Patentamt

European Patent Office

Office européen des brevets

(11) Publication number: **0 072 163**
**B1**

(12) **EUROPEAN PATENT SPECIFICATION**

(45) Date of publication of patent specification: **24.06.87**

(21) Application number: **82304041.5**

(22) Date of filing: **30.07.82**

(51) Int. Cl.⁴: **A 21 C 3/04**

(54) **Apparatus for continuously discharging dough.**

(30) Priority: **01.08.81 JP 122736/81**

(43) Date of publication of application:
**16.02.83 Bulletin 83/07**

(45) Publication of the grant of the patent:
**24.06.87 Bulletin 87/26**

(84) Designated Contracting States:
**AT BE CH DE FR GB IT LI LU NL SE**

(56) References cited:
**DE-C- 964 132**
**FR-A-2 063 307**

(73) Proprietor: **RHEON AUTOMATIC MACHINERY
CO. LTD.
2-3, Nozawa-machi
Utsunomiya-shi Tochigi-ken (JP)**

(72) Inventor: **Hayashi, Torahiko
3-4 Nozawa-machi Utsunomiya-shi
Tochigi-ken (JP)**

(74) Representative: **Leale, Robin George et al
FRANK B. DEHN & CO. Imperial House 15-19
Kingsway
London WC2B 6UZ (GB)**

Courier Press, Leamington Spa, England.

## Description

The present invention relates to an apparatus for continuously discharging dough through a discharge gap of a hopper to produce a dough strip.

Conventionally, dough is passed through a gap between a pair of rolls to produce a dough strip. However, the types of dough material which can be processed in prior art apparatus are very limited, and even in those cases where suitable types of dough are processed, the dough strips thus obtained are often highly uneven in thickness or texture, mainly because portions of dough approaching the discharge gap generate a turbulent flow, thereby increasing stress in the dough being discharged.

Apparatus is known (e.g. from French Patent No. 2063307) having features in accordance with the prior art portion of claim 1.

According to the present invention there is provided apparatus for continuously discharging dough (16, 116) to produce a dough strip (15, 115), comprising a hopper (1, 101) a conveyor (2, 103) forming at least part of the floor of the hopper, a dough discharge gap (9, 109) defined between the conveyor and the bottom of a side wall of the hopper, and a dough cutter (10, 110) extending along the top of said discharge gap and pointing in the upstream direction of the conveyor to continuously separate the discharged dough from the dough in the hopper, characterised in that said cutter comprises a stationary blade (11) secured to the said wall of said hopper and a movable blade (12) which is adapted to co-operate with said stationary blade by oscillating in a sliding manner along a surface thereof so as to sever the dough.

In operation of such apparatus, the stationary and movable blades co-operate to divide the dough at the discharge gap into two portions and cause them to move in upper and lower directions, the lower portion of the dough being readily advanced beyond the gap to be conveyed to a subsequent conveyor or station for further processing, while the upper portion of the dough is readily deflected upwardly, whereby clogging of the gap by excess dough is prevented.

The apparatus is particularly effective when used for discharging soft dough material in a state where it constitutes an integral mass with gluten tissue being well developed, such as bread obtained by kneading flour with water.

The conveyor may comprise a single endless flat conveyor belt, a portion of the upper run of which serves as the floor of said hopper. In this case, the said conveyor belt may be adapted to have a U-shaped transverse cross-section, opening outwardly with the aid of suitable means, at least when serving as the floor of said hopper. Such a belt can discharge dough at a constant rate, since the width of the dough strip is substantially defined thereby.

To attain the same effect the conveyor may comprise, in addition to said single flat conveyor belt, two further endless flat conveyor belts parallel to each other and positioned perpendicularly to, and closely adjacent, the respective sides of the upper run of the first-mentioned conveyor belt.

Alternatively, the conveyor may comprise a plurality of U-shaped elements arranged side by side to form an endless loop.

The said blades are preferably serrated to ensure effective severing of the dough.

Some embodiments of the invention will now be described by way of example and with reference to the accompanying drawings, in which:

Fig. 1 is a schematic cross-sectional side view of a first embodiment of the invention;

Fig. 2 is a schematic cross-sectional end view of the embodiment shown in Fig. 1;

Fig. 3 is a plan view of a movable blade of the cutter of such apparatus;

Fig. 4 is a plan view of the stationary blade of the cutter;

Fig. 5 is a schematic cross-sectional side view of a second embodiment of the invention;

Fig. 6 is a schematic cross-sectional end view of the embodiment shown in Fig. 5; and

Fig. 7 is a perspective view, partially shown in dotted lines, of a conveyor used in the apparatus of Figs. 5 and 6.

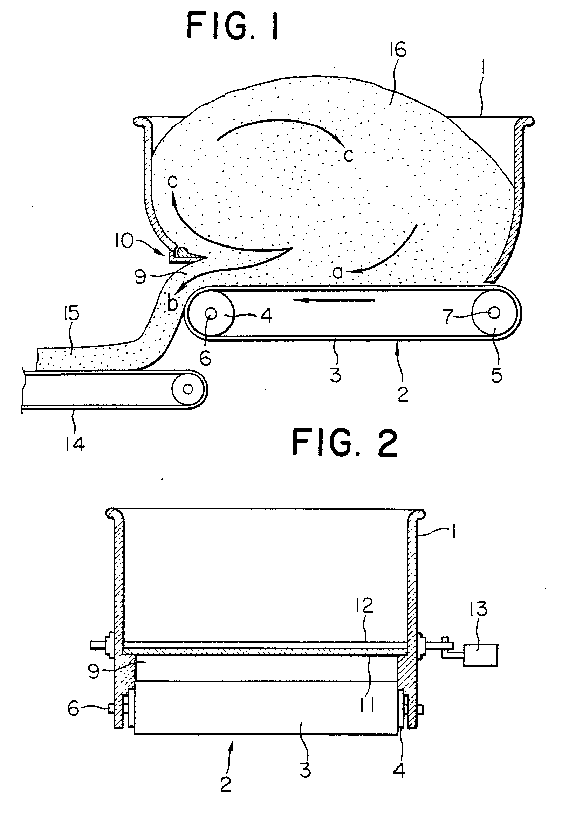

In Figs. 1 and 2, a hopper 1 receives dough 16. The hopper floor is constituted by a conveyor 2 comprising a pair of rolls 4 and 5 and an endless flat conveyor belt 3 extending there around. The shafts 6 and 7 of the rolls 4 and 5 respectively are mounted in the side walls of the hopper 1 and are rotated about their axes by a motor (not shown). A part of the upper run of the belt 3 forms the floor of the hopper 1, and the side edges of the belt 3 are closely adjacent the side walls of the hopper.

A dough discharge gap 9 is defined between the bottom of a side wall of the hopper 1 and the adjacent portion of the upper run of the belt 3. A cutter 10 extends along the top of the gap 9 and points inwardly of the hopper in the upstream direction of the conveyor, and extends in a plane substantially parallel to said adjacent portion of the upper run of the belt 3. It should be noted that said upper run of the belt 3 is continuously movable in the opposite direction from that in which the blades of the cutter 10 point.

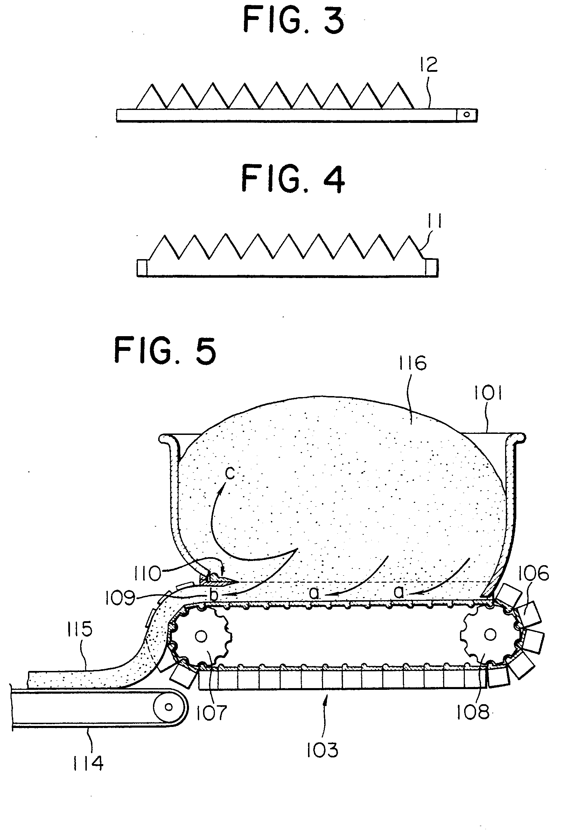

The cutter 10 comprises a stationary blade 11 secured to the side wall of the hopper 1 by suitable means, and a movable blade 12 arranged in co-operative sliding relation with said stationary blade 11 to sever the dough. A stem holding the movable blade 12 passes through the opposing side walls of the hopper 1 and is made to oscillate by a motor 13. Both of the blades are preferably serrated as shown in Figs. 3 and 4, to effectively sever dough when the movable blade 12 oscillates.

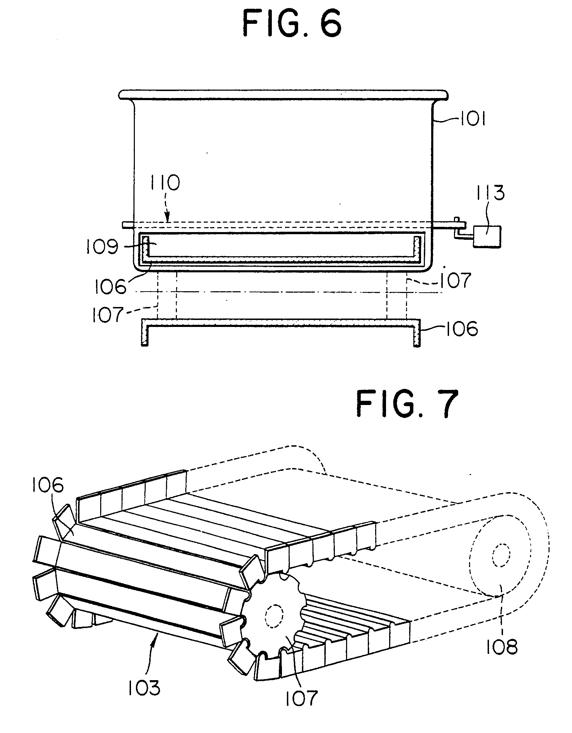

Referring now to the embodiment of Figs. 5 to 7, a conveyor 103 comprises a plurality of U-shaped elements or feed plates 106 interconnected side by side to form an endless loop.

Each U-shaped element has a small protrusion to mesh drivingly with gears 107 and 108, around which the loop of U-shaped elements is wound. The shafts of the gears are both mounted on a frame of the apparatus and are rotated about their axes by a motor (not shown). While passing through the hopper 101 the feed plates 106 abut with each other to form a tray having a predetermined width within the hopper, thereby to define the width of the dough strip to be discharged. The thickness of the finished dough strip is defined by the depth of a discharge gap 109, which is itself defined by the bottom of a side wall of the hopper 101 through which the conveyor 103 passes, and the top surface of adjacent plate 106. Thus dough is discharged at a substantially constant rate. The structure and function of the cutter 110 is the same as in the previous embodiment.

In operation of both embodiments, adequately soft dough such as bread dough 16, 116 is continuously supplied in the hopper 1, 101 to ride on the conveyor 2, 103, specifically in the first embodiment the upper run of the conveyor belt 3 and in the second embodiment a tray formed within the hopper 101 by the multiple U-shaped feed plates 106 while the conveying mechanism 103 is run. The lower portion of the dough 16, 116 will be advanced by the conveyor 2, 103 toward the discharge gap 9, 109 as shown by the arrow *a* and will be discharged through the gap as shown by the arrow *b*. A part of the dough, however, will be separated by the cutter 10, 110 from the dough to be discharged, to be deflected upwardly as shown by the arrow *c*, without jamming the exit. Thus the dough can be discharged from the apparatus at a constant rate.

It the cutter 10, 110 were not provided at the top of the gap 9, 109, the dough 16, 116 approaching the gap would be substantially wholly deflected in the direction of the arrow *c* and only a small amount of dough would be moved in the direction of the arrow *b*, in an irregular flow. This is because the dough, in which gluten tissue is well developed to form an integral mass, would have its inner stress increased in the vicinity of the discharge gap, since the movement of the dough would be hindered by the restricted dimensions of the gap. Experiments have demonstrated that no constant rate of discharge was obtained.

When the conveyor 103 of the second embodiment is used, it has been found that dough compositions with a greater range of component variations can be continuously discharged at a substantially constant rate, as compared with the conveyor 2 of the first embodiment.

The dough discharged through the gap 9, 109 is continuously transformed into a dough strip 15, 115 and is guided around an end of the conveyor 2, 103 onto a receiving conveyor 14, 114 positioned below the discharge gap.

## Claims

1. Apparatus for continuously discharging dough to produce a dough strip, comprising a hopper, a conveyor forming at least part of the floor of the hopper, a dough discharge gap defined between the conveyor and the bottom of a side wall of the hopper, and a dough cutter extending along the top of said discharge gap and pointing in the upstream direction of the conveyor to continuously separate the discharged dough from the dough in the hopper, characterised in that said cutter comprises a stationary blade secured to the said side wall of said hopper and a movable blade which is adapted to co-operate with said stationary blade by oscillating in a sliding manner along a surface thereof so as to sever the dough.

2. Apparatus as claimed in claim 1, wherein the said cutter extends in a plane parallel to the adjacent surface of the conveyor.

3. Apparatus according to claim 1 or 2, in which the said conveyor comprises an endless flat conveyor belt, a portion of the upper run of which serves as the floor of said hopper.

4. Apparatus according to claim 3, in which said conveyor belt is adapted to have a U-shaped transverse cross-section, opening outwardly, at least when serving as the floor of said hopper.

5. Apparatus according to claim 3, in which said conveyor comprises two further endless flat conveyor belts parallel to each other and positioned perpendicularly to, and closely adjacent, the upper run of the first-mentioned conveyor belt, at the respective sides thereof.

6. Apparatus according to claim 1 or 2, in which said conveyor comprises a plurality of U-shaped elements arranged side by side to form an endless loop.

7. Apparatus according to any of the preceding claims, in which both of said blades are serrated.

**Patentansprüche**

1. Vorrichtung zur fortlaufenden Abgabe von Teig, um einen Teigstreifen zu erzeugen, umfassend einen Trichter, einen Förderer, der wenigstens einen Teil des Bodens des Trichters bildet, einen Teigabgabespalt, der zwischen dem Förderer und dem Boden einer Seitenwand des Trichters gebildet ist, und einen Teigschneider, der sich entlang der Oberseite des Abgabespaltes erstreckt und in Stromaufwärtsrichtung des Förderers weist, um den abgegebenen Teig fortlaufend von dem Teig in dem Trichter zu trennen, dadurch gekennzeichnet, daß der Schneider ein stillstehendes Messer, welches an der genannten Seitenwand des Trichters befestigt ist, und ein bewegliches Messer aufweist, welches mit dem feststehenden Messer zusammenarbeiten kann durch Oszillieren nach Art eines Gleitens entlang einer Fläche des feststehenden Messers, derart, daß der Teig abgeschnitten wird.

2. Vorrichtung nach Anspruch 1, wobei der Schneider sich in einer Ebene parallel zu der benachbarten Fläche des Förderers erstreckt.

3. Vorrichtung nach Anspruch 1 oder 2, bei welcher der Förderer ein endloses ebenes Förderband aufweist, und ein Teil des oberen Trums des Förderbandes als Boden des Trichters dient.

4. Vorrichtung nach Anspruch 3, bei welcher das Förderband U-förmigen Querschnitt haben kann, der sich wenigstens dann nach außen öffnet, wenn das Band als Boden des Trichters dient.

5. Vorrichtung nach Anspruch 3, bei welcher der Förderer zwei weitere endlose ebene Förderbänder aufweist, die parallel zueinander verlaufen und rechtwinklig und eng benachbart zu dem oberen Trum des zuerst genannten Förderbandes an dessen betreffenden Seiten angeordnet ist.

6. Vorrichtung nach Anspruch 1 oder 2, in welcher der Förderer eine Mehrzahl von U-förmigen Elementen aufweist, die Seite an Seite angeordnet sind, um eine endlose Schleife zu bilden.

7. Vorrichtung nach irgendeinem der vorhergehenden Ansprüche, bei welcher beide Messer gezahnt sind.

**Revendications**

1. Appareil pour décharger en continu de la pâte afin de produire une bande de pâte, comprenant une trémie, un transporteur formant au moins une partie du fond de la trémie, un intervalle de décharge de pâte défini entre le transporteur et le bas d'une paroi latérale de la trémie, et un couteau à pâte s'étendant le long du haut dudit intervalle de décharge et orienté vers l'amont par rapport au sens du mouvement du transporteur afin de séparer en continu la pâte déchargée de la pâte se trouvant dans la trémie, caractérisé en ce que ledit couteau comprend une lame fixe assujettie à ladite paroi latérale de ladite trémie et une lame mobile qui est conçue pour coopérer avec ladite lame fixe en oscillant et en coulissant le long d'une surface de celle-ci afin de sectionner la pâte.

2. Appareil selon la revendication 1, dans lequel ledit couteau s'étend dans un plan parallèle à la surface adjacente du transporteur.

3. Appareil selon la revendication 1 ou 2, dans lequel ledit transporteur comprend une bande transporteuse plate sans fin dont un tronçon du brin supérieur sert de fond à ladite trémie.

4. Appareil selon la revendication 3, dans lequel ladite bande transporteuse est conçue de façon à présenter une section transversale de forme en U, s'ouvrant vers l'extrérieur, au moins lorsqu'elle sert de fond pour ladite trémie.

5. Appareil selon la revendication 3, dans lequel ledit transporteur comprend deux autres bandes transporteuses sans fin parallèles entre elles et positionnées perpendiculairement au brin supérieur de la première bande transporteuse citée et à proximité immédiate de celui-ci, sur ses côtés respectifs.

6. Appareil selon la revendication 1 ou 2, dans lequel ledit transporteur comprend plusieurs éléments de forme en U disposés côte à côte pour former une boucle sans fin.

7. Appareil selon l'une quelconque des revendications précédentes, dans lequel lesdites deux lames sont dentées.

# FIG. 1

# FIG. 2

# FIG. 3

12

# FIG. 4

11

# FIG. 5

116

101

c

110

109

b

106

a

a

115

107

108

114

103

# FIG. 6

# FIG. 7